# EUROPEAN PATENT APPLICATION

(11) **EP 2 662 774 A1**
(43) Date of publication of application: **13.11.2013**
(21) Application number: 11866630.4
(22) Date of filing: 27.10.2011
(51) Int. Cl.: G06F 12/08

(54) **METHOD FOR CONTROLLING BUFFER MAPPING AND BUFFER SYSTEM**

(71) Applicant: Huawei Technologies Co., Ltd., Shenzhen, Guangdong 518129 (CN)
(72) Inventor: WANG, Zhuzhen, Shenzhen Guangdong 518129 (CN); WANG, Ziyi, Shenzhen Guangdong 518129 (CN)
(74) Representative: Lord, Michael
(86) International application number: PCT/CN2011/081449
(87) International publication number: WO 2012/163027

(57) **Abstract**

The present invention relates to a method for controlling cache mapping and a cache system. The method includes: changing, at a preset time interval, a target data block in a cache of an underlying storage medium, where at least one data block in the underlying storage medium is mapped to the target data block, one or more data blocks in the underlying storage medium are mapped only to one target data block in the cache, the cache of the underlying storage medium includes a flash memory medium, and the changed target data block in the cache includes a target data block currently having the maximum number of erasure times in the cache. By utilizing the technical solution, the service life of the flash memory medium can be optimized.

## Description

### TECHNICAL FIELD

The present invention relates to a cache mapping technology of a cache system, and in particular, to a method for controlling cache mapping when a flash memory medium is used as a cache and a cache system.

### BACKGROUND

A flash memory (Flash Memory) medium is a nonvolatile storage having a long service life, and is capable of maintaining stored data information when power is turned off. In the prior art, a flash memory medium is often used as a cache of an underlying storage medium that may be a conventional disk storage system, such as a hard disk and a hard disk array, so as to relieve performance constraints caused by poor input/output performance of the underlying storage medium.

Generally, when a flash memory medium is used as a cache, a mapping policy adopted between the cache and the underlying storage medium is N-way set associative mapping. In N-way set associative mapping, according to the size of the cache serving as a mapping target, the underlying storage medium serving as a mapping source is divided into multiple sets, where the capacity of each set is equal to the size of the cache. According to the number and size of target data blocks included in the cache, each set of the underlying storage medium is divided into the same number of areas (that is, data blocks), where the size of each area is consistent with the size of one target data block in the cache. In one set of the underlying storage medium, different data blocks correspond to different target data blocks in the cache. In different sets of the underlying storage medium, a data block at a corresponding position is mapped to the same target data block in the cache.

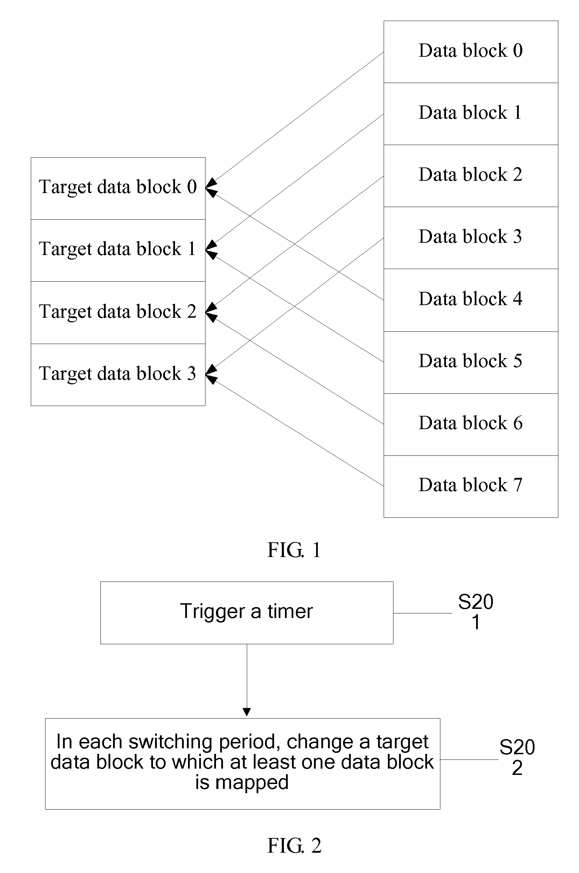

FIG. 1 shows an example of N-way set associative mapping. In this example, a flash memory medium serving as a cache is divided into 4 target data blocks from a target data block 0 to a target data block 3, a hard disk serving as a mapping source includes two sets, each set is divided into data blocks corresponding to the 4 target data blocks of the cache, and the size of each data block in the hard disk is consistent with the size of each target data block in the flash memory medium. In this example, an N-way set associative mapping relationship between the hard disk and the cache is as follows: a data block 0 in a first set (including the data block 0 to a data block 3) and a data block 4 in a second set (including the data block 4 to a data block 7) of the hard disk are mapped to the target data block 0 in the flash memory medium, a data block 1 in the first set and a data block 5 in the second set of the hard disk are mapped to a target data block 1 in the flash memory medium, a data block 2 in the first set and a data block 6 in the second set of the hard disk are mapped to a target data block 2 in the flash memory medium, and the data block 3 in the first set and the data block 7 in the second set of the hard disk are mapped to the target data block 3 in the flash memory medium. According to the mapping relationship, data in the data block 0 and the data block 4 is cached in the target data block 0, data in the data block 1 and the data block 5 is cached in the target data block 1, data in the data block 2 and the data block 6 is cached in the target data block 2, and data in the data block 3 and the data block 7 is cached in the target data block 3.

However, in the prior art, the mapping relationship between a cache and an underlying storage medium is generally static. In the whole working process of a system, a target data block in the cache to which a data block in the underlying storage medium is mapped generally remains unchanged. As a result, when a flash memory medium is used as a cache, for an application scenario in which data in a local area in the system is accessed unusually frequently, the number of erasure times of a medium area of the flash memory medium to which the frequently accessed data in the system is mapped is excessively high. Since the number of erasure times of the flash memory medium is limited, the medium area of the flash memory medium to which the frequently accessed data is mapped reaches the limit of the number of erasure times more rapidly than other areas, resulting in that the entire flash memory medium is unavailable.

### SUMMARY

In view of the disadvantages of the prior art, embodiments of the present invention provide a method for controlling cache mapping and a cache system, where a dynamic mapping policy is adopted between a cache and an underlying storage medium, so that frequently accessed data in the system is not statically mapped to a certain target data block on the cache, thereby optimizing the service life of a flash memory medium serving as the cache.

An embodiment of the present invention provides a method for controlling cache mapping, where the method includes: changing, at a preset time interval, a target data block in a cache of an underlying storage medium, where at least one data block in the underlying storage medium is mapped to the target data block, one or more data blocks in the underlying storage medium are mapped only to one target data block in the cache, the cache of the underlying storage medium includes a flash memory medium, and the changed target data block in the cache includes a target data block currently having the maximum number of erasure times in the cache.

An embodiment of the present invention provides a method for controlling cache mapping, where the method includes:
monitoring the number of erasure times of each target data block in a cache of an underlying storage medium, where one or more data blocks in the underlying storage medium are mapped only to one target data block in the cache, and the cache of the underlying storage medium includes a flash memory medium;
when a difference in the number of erasure times between a target data block having the maximum number of erasure times and a target data block having the minimum number of erasure times in the cache reaches a preset erasure threshold, changing a target data block in the cache to which at least one data block in the underlying storage medium is mapped, where the changed target data block in the cache includes a target data block currently having the maximum number of erasure times in the cache; and
continuously monitoring the number of erasure times generated after each target data block in the cache is changed.

An embodiment of the present invention provides a cache system, where the cache system includes: an underlying storage medium; a flash memory medium, coupled to the underlying storage medium, and serving as a cache of the underlying storage medium, where one or more data blocks in the underlying storage medium are mapped only to one target data block in the cache; and a processor, configured to: change, at a preset time interval, a target data block in the cache of the underlying storage medium, where at least one data block in the underlying storage medium is mapped to the target data block, and the changed target data block in the cache includes a target data block currently having the maximum number of erasure times in the cache.

An embodiment of the present invention provides a cache system, where the cache system includes: an underlying storage medium; a flash memory medium, coupled to the underlying storage medium, and serving as a cache of the underlying storage medium, where one or more data blocks in the underlying storage medium are mapped only to one target data block in the cache; and a processor, configured to: monitor the number of erasure times of each target data block in the cache; when a difference in the number of erasure times between a target data block having the maximum number of erasure times and a target data block having the minimum number of erasure times in the cache reaches a preset erasure threshold, change a target data block in the cache to which at least one data block in the underlying storage medium is mapped, where the changed target data block in the cache includes a target data block currently having the maximum number of erasure times in the cache; and
continuously monitor the number of erasure times generated after each target data block in the cache is changed.

According to the method and apparatus in the embodiments of the present invention, a target data block in a cache to which at least one data block erasure times in an underlying storage medium is mapped is changed, where the at least one data block includes a data block corresponding to a target data block currently having the maximum number of erasure times. In this way, the service life of a flash memory medium serving as the cache is optimized.

### BRIEF DESCRIPTION OF DRAWINGS

The objectives, features, characteristics and advantages of the present invention will become apparent through detailed description below with reference to the following accompanying drawings.
FIG. 1 shows an example of N-way set associative mapping;
FIG. 2 is a schematic flow chart of a method for controlling cache mapping according to a first embodiment of the present invention;
FIG. 3 to FIG. 5 are schematic diagrams of mapping relationships in different switching periods in an example of controlling cache mapping by adopting the method according to the first embodiment of the present invention;
FIG. 6 to FIG. 11 are schematic diagrams of mapping relationships in different switching periods in another example of controlling cache mapping by adopting the method according to the first embodiment of the present invention;
FIG. 12 is a schematic flow chart of a method for controlling cache mapping according to a second embodiment of the present invention;
FIG. 13 and FIG. 14 are schematic diagrams of mapping relationships in an example of controlling cache mapping by adopting the method according to the second embodiment of the present invention; and
FIG. 15 shows a cache system according to an embodiment of the present invention.

### DESCRIPTION OF EMBODIMENTS

Embodiments of the present invention provide a method for controlling cache mapping and a cache system. The method includes: changing, at a preset time interval, a target data block in a cache of an underlying storage medium, where at least one data block in the underlying storage medium is mapped to the target data block, one or more data blocks in the underlying storage medium are mapped only to one target data block in the cache, the cache of the underlying storage medium includes a flash memory medium, and the changed target data block in the cache includes a target data block currently having the maximum number of erasure times in the cache.

Each embodiment of the present invention is described in detail below with reference to the accompanying drawings.

FIG. 2 is a schematic flow chart of a method for controlling cache mapping according to a first embodiment of the present invention. In this embodiment, a flash memory medium is used as a cache, an underlying storage medium is, for example, a hard disk, and one or more data blocks in the underlying storage medium are mapped only to one target data block in the cache. The flash memory medium includes a solid state disk, that is, SSD (solid state disk) disk.

As shown in FIG. 2, the method for controlling cache mapping according to the first embodiment includes the following steps:
Step S201: Trigger, according to a preset switching period T, a timer to start timing.
Step S202: In each switching period of one switching cycle, change a target data block in the cache to which at least one data block in the hard disk is mapped, so that after one switching cycle, the numbers of erasure times of target data blocks in the cache are close to one another, where the number of switching periods included in one switching cycle is not less than the number N of the target data blocks included in the cache.

FIG. 1 and FIG. 3 to FIG. 5 show a specific example of controlling cache mapping by adopting the method according to the first embodiment of the present invention. In this example, in each switching period of one switching cycle, a target data block in a cache to which each data block in a hard disk is mapped is changed, so that each data block in the hard disk is mapped to different target data blocks in the cache in different switching periods of one switching cycle, where the number of switching periods included in one switching cycle is equal to the number N of target data blocks included in the cache. In this example, for example, but not as a limitation, the cache has 4 target data blocks, the hard disk includes two sets, each set is divided into 4 data blocks corresponding to the 4 target data blocks of the cache, and the size of each data block in the hard disk is consistent with the size of each target data block in the flash memory medium.

As shown in FIG. 1 and FIG. 3 to FIG. 5, this example adopts a dynamic switching policy of periodic round robin, and the number of switching periods included in one switching cycle is equal to the number N of the target data blocks included in the cache, where N is an integer greater than 0, and in this example, N=4. In this example, after each switching period, a mapping target corresponding to each data block in the hard disk is switched. Each data block in the hard disk is mapped to different target data blocks in different switching periods.

Specifically, in this example, a mapping relationship shown in FIG. 1 is adopted at the beginning. As shown in FIG. 1, in this example, at the beginning, the mapping relationship between the hard disk and the cache is as follows: a data block 0 and a data block 4 of the hard disk are mapped to a target data block 0 of the cache, a data block 1 and a data block 5 of the hard disk are mapped to a target data block 1 of the cache, a data block 2 and a data block 6 of the hard disk are mapped to a target data block 2 of the cache, and a data block 3 and a data block 7 of the hard disk are mapped to a target data block 3 of the cache. The numerals are numbers of the data blocks or the target data blocks.

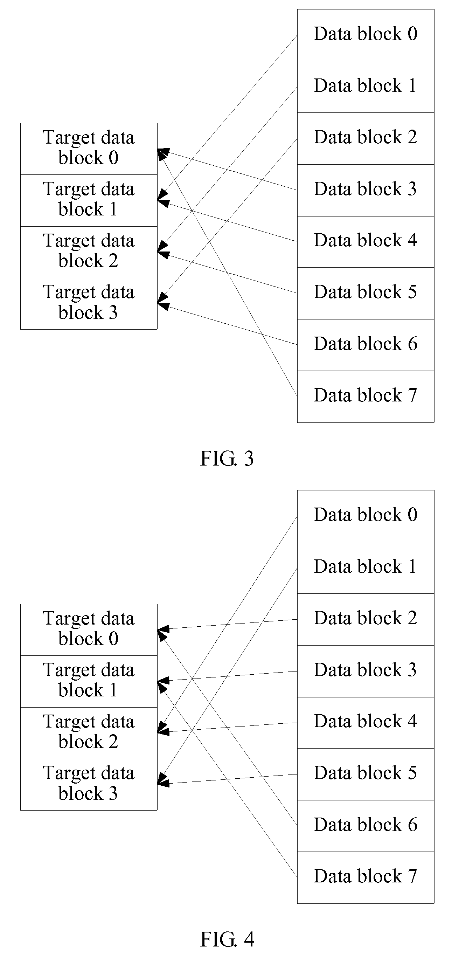

When a first switching period (referred to as a first period for short) expires, data cached in each target data block in the flash memory medium is migrated to another target data block. In this example, for example, valid data currently cached in the target data block 0 in the flash memory medium is migrated to the target data block 1, valid data currently cached in the target data block 1 is migrated to the target data block 2, valid data currently cached in the target data block 2 is migrated to the target data block 3, and valid data currently cached in the target data block 3 is migrated to the target data block 0. After the data in the cache is migrated, according to migration of data in the target data blocks, a target data block to which each data block in the hard disk is mapped is correspondingly changed. After this migration, the mapping relationship obtained through modification is shown in FIG. 3.

When a second period expires, similarly, valid data currently cached in the target data block 0 in the flash memory medium is migrated to the target data block 1, valid data currently cached in the target data block 1 is migrated to the target data block 2, valid data currently cached in the target data block 2 is migrated to the target data block 3, and valid data currently cached in the target data block 3 is migrated to the target data block 0. After this migration, the mapping relationship between the cache and the hard disk is modified according to this migration, and the mapping relationship after the modification is shown in FIG. 4.

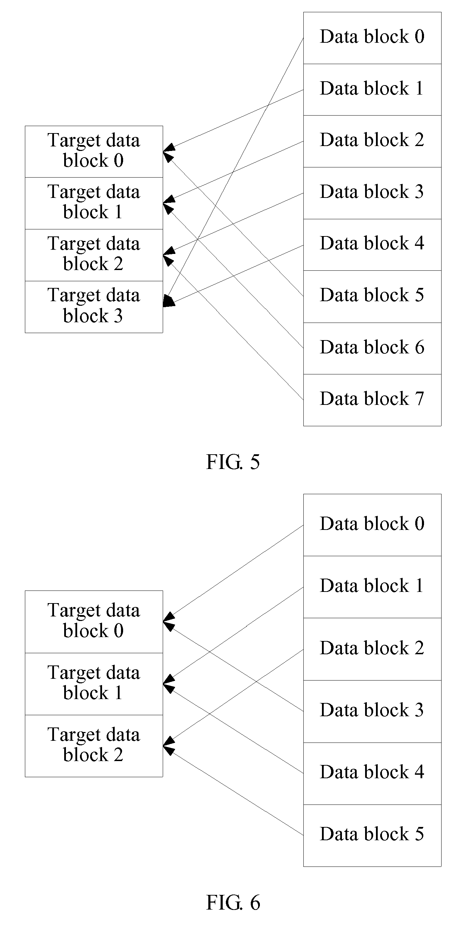

When a third period expires, similarly, valid data currently cached in the target data block 0 in the flash memory medium is migrated to the target data block 1, valid data currently cached in the target data block 1 is migrated to the target data block 2, valid data currently cached in the target data block 3 is migrated to the target data block 3, and valid data currently cached in the target data block 3 is migrated to the target data block 0. After this migration, the mapping relationship between the cache and the hard disk is modified according to this modification, and the mapping relationship after the modification, that is, the mapping relationship obtained through the modification is shown in FIG. 5. When a fourth period expires, similarly, after the migration is performed, the mapping relationship is correspondingly modified, and the mapping relationship obtained through the modification is shown in FIG. 1, that is, the mapping relationship obtained through the modification returns back to that in the first period. In this way, one switching cycle ends. Then, a switching process of a next switching cycle can be continued.

In this embodiment, after the migration of data cached in the target data blocks, a target data block to which a data block is mapped can be changed by updating cache metadata stored in a flash memory medium and/or memory.

In a scenario in which a local area such as a data block in the hard disk is frequently accessed, in each switching period of one switching cycle, the frequently accessed data block in the hard disk is mapped to different target data blocks in the flash memory medium, so that the frequently accessed local area in the hard disk is not merely statically mapped to a fixed target data block all the time, thereby prolonging and optimizing the service life of the flash memory medium. Furthermore, after one round robin switching cycle described above, the numbers of erasure times of the target data blocks in the flash memory medium are close to one another, and are close to an average value, and the numbers of erasure times of the target data blocks are evenly distributed, so that the service life of the flash memory medium is optimized.

In this embodiment, in dynamic switching of the mapping relationship, according to a number sequence of the target data blocks in the cache, data in each target data block in the cache is migrated to a target data block having a number adjacent to that of the target data block in a round robin manner. The example is merely an exemplary example, and other round robin manners are also applicable. For example, when a switching period expires, in a sequence that: data currently cached in the target data block 0 is migrated to the target data block 3, data currently cached in the target data block 3 is migrated to the target data block 2, data currently cached in the target data block 2 is migrated to the target data block 1, and data currently cached in the target data block 1 is migrated to the target data block 0, the data cached in each target data block in the cache is migrated when a switching period expires. Then, a target data block to which each data block in the underlying storage medium such as the hard disk is mapped is correspondingly changed, and the mapping relationship between the hard disk and the cache is correspondingly changed.

Definitely, in addition to the round robin manner described above, other manners of changing a target data block in the cache to which at least one data block in the underlying storage medium is mapped are also applicable, provided that after one switching cycle, the numbers of erasure times of the target data blocks in the cache are close to one another. The being close to one another may refer to that the numbers of erasure times of the target data blocks are close to an average value, and specifically, refer to that a difference in the number of erasure times between the target data blocks is less than a preset threshold of a difference in the number of erasure times. The threshold of the difference may be set according to a requirement or a specific application scenario.

When the dynamic switching policy of periodic round robin is adopted, a user can flexibly set the switching period according to an application scenario, and the switching cycle is relatively short. However, when a mapping target is switched each time, all valid data in the cache is migrated, so the dynamic switching policy of periodic round robin is more suitable for a cache having a small capacity.

FIG. 6 to FIG. 11 show another example of controlling cache mapping by adopting the method according to the first embodiment of the present invention. In this example, a periodic-arrangement dynamic switching mapping policy is adopted to change a target data block in a cache to which each data block in a hard disk is mapped, so that after one switching cycle, the numbers of erasure times of target data blocks in the cache are close to one another. In this example, the number of switching periods included in one switching cycle is equal to N x (N-1), where N is the number of the target data blocks included in the cache, and N is an integer greater than 0. For example, in this example, N=3. Therefore, one switching cycle includes 6 switching periods in this example.

In this example, a flash memory medium is used as the cache, and an underlying storage medium is, for example, used as the hard disk. For example, but not as a limitation, the cache has 3 target data blocks, the hard disk includes two sets, each set is divided into 3 data blocks corresponding to the 3 target data blocks of the cache, and the size of each data block in the hard disk is consistent with the size of each target data block in the flash memory medium.

In this example, in each switching period of one switching cycle, data cached in a target data block currently having the maximum number of erasure times in the cache is interchanged with data cached in a target data block in the cache other than the target data block having the maximum number of erasure times, where the data in the latter target data block is interchanged the minimum number of times in the current switching cycle, and the latter target data block is different from a target data block that interchanges data with the target data block currently having the maximum number of erasure times in a previous switching period of the current switching cycle, that is, data is mutually migrated, and a target data block to which a corresponding data block in the hard disk is mapped is correspondingly changed according to the migration of data cached in the target data block. Each target data block in the cache has N-1 chances to be the target data block having the maximum number of erasure times, that is to say, in one switching cycle, each target data block is the target data block having the maximum number of erasure times, that is, corresponds to a data block that is the most frequently accessed, in different N-1 periods.

For example, it is assumed that at the beginning of the switching cycle, a target data block 0 in the flash memory medium has the maximum number of erasure times, it indicates that a data block 0 and a data block 3 in the hard disk that are mapped to the target data block 0 are the most frequently accessed. In addition to the target data block 0, the target data blocks include a target data block 1 and a target data block 2. As shown in FIG. 6, in this example, before a first period expires, the mapping relationship between the hard disk and the cache is as follows: the data block 0 and the data block 3 of the hard disk are mapped to the target data block 0 of the cache, a data block 1 and a data block 4 of the hard disk are mapped to the target data block 1 of the cache, a data block 2 and a data block 5 of the hard disk are mapped to the target data block 2 of the cache.

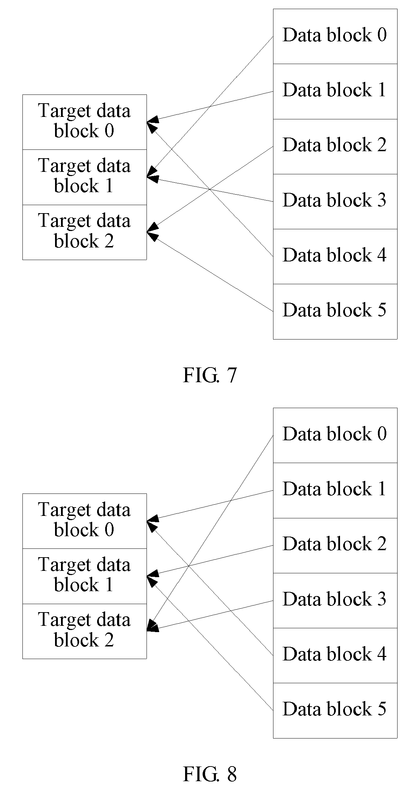

In this example, for example, when the first period expires, valid data currently cached in the target data block 0 in the flash memory medium is migrated to the target data block 1, and valid data currently cached in the target data block 1 is migrated to the target data block 0. After the migration of data in the cache, according to the migration of data in the target data blocks, the target data block in the cache to which the data block 0 and the data block 3 in the hard disk are mapped and the target data block in the cache to which the data block 1 and the data block 4 in the hard disk are mapped are correspondingly changed. After this migration, the mapping relationship obtained through modification is shown in FIG. 7. At this time, the data block 0 and the data block 3 that are the most frequently accessed are mapped to the target data block 1.

When a second period expires, valid data cached in the target data block 1 currently having the maximum number of erasure times in the flash memory medium is migrated to the target data block 2, and valid data currently cached in the target data block 2 is migrated to the target data block 1. After the migration of data in the cache, according to the migration of data in the target data blocks, the target data block in the cache to which the data block 0 and the data block 3 in the hard disk are mapped and the target data block in the cache to which the data block 2 and the data block 5 in the hard disk are mapped are correspondingly changed. After this migration, the mapping relationship obtained through modification is shown in FIG. 8. At this time, the data block 0 and the data block 3 in the hard disk that are the most frequently accessed are mapped to the target data block 2.

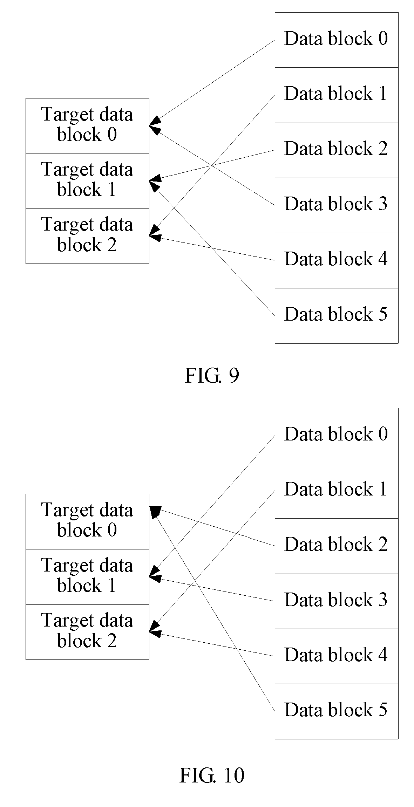

When a third period expires, valid data cached in the target data block 2 currently having the maximum number of erasure times in the flash memory medium is migrated to the target data block 0, and valid data currently cached in the target data block 0 is migrated to the target data block 2. After the migration of data in the cache, according to the migration of data in the target data blocks. After this migration, the mapping relationship obtained through modification is shown in FIG. 9. At this time, the data block 0 and the data block 3 in the hard disk that are the most frequently accessed are mapped to the target data block 0.

When a fourth period expires, valid data cached in the target data block 0 currently having the maximum number of erasure times in the flash memory medium is migrated to the target data block 1, and valid data currently cached in the target data block 1 is migrated to the target data block 0. After the migration of data in the cache, according to the migration of data in the target data blocks. After this migration, the mapping relationship obtained through modification is shown in FIG. 10. At this time, the data block 0 and the data block 3 in the hard disk that are the most frequently accessed are mapped to the target data block 1.

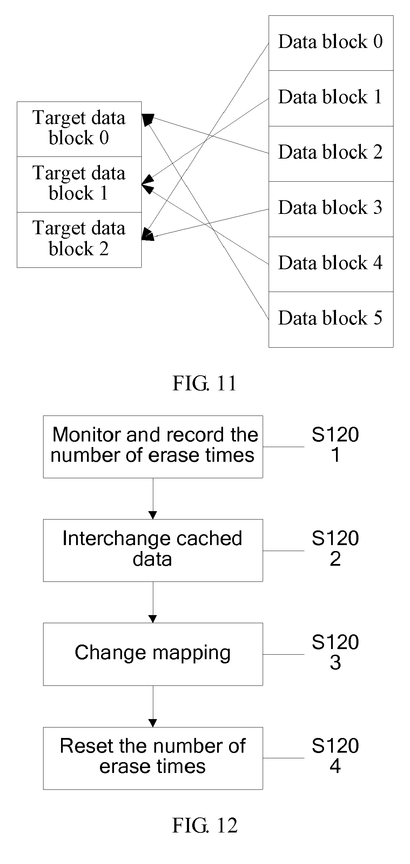

When a fifth period expires, valid data cached in the target data block 1 currently having the maximum number of erasure times in the flash memory medium is migrated to the target data block 2, and valid data currently cached in the target data block 2 is migrated to the target data block 1. After the migration of data in the cache, according to the migration of data in the target data blocks. After this migration, the mapping relationship obtained through modification is shown in FIG. 11. At this time, the data block 0 and the data block 3 in the hard disk that are the most frequently accessed are mapped to the target data block 2.

When a sixth period expires, valid data cached in the target data block 2 currently having the maximum number of erasure times in the flash memory medium is migrated to the target data block 0, and valid data currently cached in the target data block 0 is migrated to the target data block 2. After the migration of data in the cache, according to the migration of data in the target data blocks. After this migration, the mapping relationship obtained through modification returns back to that shown in FIG. 6. At this time, one switching cycle ends, and from FIG. 6, a next switching cycle is continuously performed according to the switching sequence shown in FIG. 6 to FIG. 11.

In this example, when each period expires, a switching target of the target data block currently having the maximum number of erasure times, that is, the target data block to which the data block that is the most frequently accessed currently is mapped is selected according to the number sequence of the target data blocks. In other embodiments, when the number of the target data blocks exceeds 3, a switching target may be selected according to or not according to the number sequence of the target data blocks, provided that data in the switching target has been interchanged with other target data blocks the maximum number of times in the current switching cycle, and the switching target is any target data block different from a target data block that just performs data interchange with the target data block currently having the maximum number of erasure times in a previous switching period of the current switching cycle.

In this embodiment, after the migration of data cached in the target data blocks, a target data block to which a data block is mapped can be changed by updating cache metadata stored in a flash memory medium and/or memory.

In a scenario in which a local area such as a data block in the hard disk is frequently accessed, in each switching period of one switching cycle, the frequently accessed data block in the hard disk is mapped to different target data blocks in the flash memory medium, so that the frequently accessed local area in the hard disk is not merely mapped to a fixed target data block all the time, thereby prolonging and optimizing the service life of the flash memory medium. Furthermore, after one periodic-arrangement switching cycle described above, the numbers of erasure times of the target data blocks in the flash memory medium are close to one another, and are close to an average value, and the numbers of erasure times of the target data blocks are evenly distributed, so that the service life of the flash memory medium is optimized. Furthermore, by adopting the periodic-arrangement dynamic switching mapping policy of this embodiment, when a mapping target is switched each time, only valid data in two target data blocks in the cache is migrated, which has no severe influence on the performance, and can apply to caches of various sizes.

The periodic dynamic mapping switching methods between the underlying storage medium and the cache described above are applicable in an application scenario in which services have periodic rules, especially in a scenario in which services have periodic rules and data that is the most frequently accessed in the system is stored at a fixed position on a hard disk.

An embodiment of the present invention further provides a solution of controlling cache mapping, where the solution includes: monitoring the number of erasure times of each target data block in a cache of an underlying storage medium, where one or more data blocks in the underlying storage medium are mapped only to one target data block in the cache, and the cache of the underlying storage medium includes a flash memory medium; when a difference in the number of erasure times between a target data block having the maximum number of erasure times and a target data block having the minimum number of erasure times in the cache reaches a preset erasure threshold, changing a target data block in the cache to which at least one data block in the underlying storage medium is mapped, where the changed target data block in the cache includes a target data block currently having the maximum number of erasure times in the cache; and continuously monitoring the number of erasure times generated after each target data block in the cache is changed.

FIG. 12 is a schematic flow chart of a method for controlling cache mapping according to a second embodiment of the present invention. In this embodiment, a flash memory medium is used as a cache, and an underlying storage medium is, for example, used as a hard disk. For example, but not as a limitation, the cache has 4 target data blocks, the hard disk includes two sets, each set is divided into 4 data blocks corresponding to the 4 target data blocks of the cache, and the size of each data block in the hard disk is consistent with the size of each target data block in the flash memory medium.

As shown in FIG. 12, the method for controlling cache mapping according to this embodiment includes the following steps:
Step S1201: Monitor and record the number of erasure times of each target data block in the cache.
Step S1202: When a difference in the number of erasure times between a target data block having the maximum number of erasure times and a target data block having the minimum number of erasure times in the cache reaches a preset erasure threshold, interchange data cached in the target data block having the maximum number of erasure times with data cached in the target data block having the minimum number of erasure times.
Step S1203: According to the interchange of the target data blocks, correspondingly change a target data block in the cache to which all data blocks currently mapped to the target data block having the maximum number of erasure times in the underlying storage medium are mapped with a target data block in the cache to which all data blocks currently mapped to the target data block having the minimum number of erasure times are mapped. Specifically, perform a change so that all data blocks currently mapped to the target data block having the maximum number of erasure times in the underlying storage medium are mapped to a target data block currently having the minimum number of erasure times, and all data blocks currently mapped to the target data block having the minimum number of erasure times in the underlying storage medium are mapped to a target data block currently having the maximum number of erasure times. Specifically, the mapping relationship between data blocks in the hard disk and target data blocks in the cache can be changed by changing cache metadata.
Step S1204: After the mapping between the hard disk and the cache is changed, reset the recorded number of erasure times of each target data block of the cache, and return to step S1201 to continuously monitor and record the number of erasure times of each target data block that are generated after the mapping change, and perform step S1203 and step S1204 when a condition is met. For example, a counter may be used to record the number of erasure times of each target data block. After the mapping change each time, the counter is reset, then, starts to count, and records the number of erasure times generated after the mapping change.

FIG. 1, FIG. 13, and FIG. 14 show a specific example of controlling cache mapping by adopting the method according to the second embodiment of the present invention. In this example, it is assumed a mapping relationship shown in FIG. 1 is adopted between a hard disk and a cache at the beginning. As shown in FIG. 1, at the beginning, the mapping relationship between the hard disk and the cache is as follows: a data block 0 and a data block 4 of the hard disk are mapped to a target data block 0 of the cache, a data block 1 and a data block 5 of the hard disk are mapped to a target data block 1 of the cache, a data block 2 and a data block 6 of the hard disk are mapped to a target data block 2 of the cache, and a data block 3 and a data block 7 of the hard disk are mapped to a target data block 3 of the cache. The number of erasure times of each target data block in the cache is monitored.

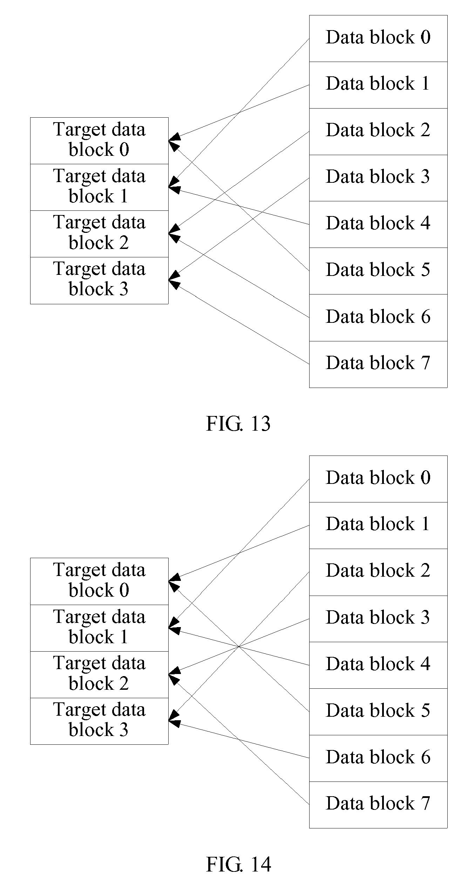

It is assumed that the target data block 0 currently has the maximum number of erasure times, and the target data block 1 currently has the minimum number of erasure times. With the progress of data caching, the number of erasure times of each target data block is monitored and recorded. When it is determined that a difference in the number of erasure times between the target data block 0 and the target data block 1 reaches an erasure threshold S, data cached in the target data block 0 having the maximum number of erasure times is interchanged with data cached in the target data block 1 having the minimum number of erasure times, and correspondingly, a change is performed so that all data blocks (in this example, the data block 0 and the data block 4) currently mapped to the target data block 0 in the hard disk are mapped to the target data block 1, and all data blocks (in this example, the data block 1 and the data block 5) currently mapped to the target data block 1 are mapped to the target data block 0. The mapping relationship after the change is shown in FIG. 13. Then, the number of erasure times of each target data block in the cache is reset, and the number of erasure times of each target data block in the cache that are generated after the mapping change is continuously monitored.

In this example, after the previous exchange, with the progress of data caching, it is assumed that the number of erasure times of the target data block 3 gets to be the minimum, and the number of erasure times of the target data block 2 gets to be the maximum. When a difference in the number of erasure times between the target data block 2 and the target data block 3 reaches the erasure threshold S, data cached in the target data block 2 having the maximum number of erasure times is interchanged with data cached in the target data block 3 having the minimum number of erasure times, and correspondingly, a change is performed so that all data blocks (in this example, the data block 2 and the data block 6) currently mapped to the target data block 2 in the hard disk are mapped to the target data block 3, and all data blocks (in this example, the data block 3 and the data block 7) currently mapped to the target data block 3 are mapped to the target data block 2. The mapping relationship after the change is shown in FIG. 14. Then, the number of erasure times of each target data block in the cache is reset, the number of erasure times of each target data block in the cache that are generated after the mapping change is continuously monitored, and when a difference in the number of erasure times between a target data block having the maximum number of erasure times and a target data block having the minimum number of erasure times reaches the preset erasure threshold S, the mapping between the hard disk and the cache is changed in a manner similar to that described above.

By using this embodiment, it is ensured that a difference between the maximum number of erasure times and the minimum number of erasure times of the target data blocks in the flash memory medium and a difference between the maximum number of erasure times and the minimum number of erasure times of erased blocks are controllable, so that the number of erasure times of each target data block is close to an average value. The variance of the number of erasure times of a target data block in the flash memory medium can be controlled by setting the erasure threshold S. This embodiment is especially applicable to an application scenario in which services have no periodic phenomenon or have an unobvious periodic phenomenon.

In the implementation of the embodiments of the present invention, the number of erasure times can be replaced with the number of replacement times, and the number of replacement times is monitored and recorded to perform dynamic mapping switching. As understood by persons skilled in the art, in a cache, an operation of replacing data with other data written in is referred to as cache replacement.

In specific applications, a user may select a dynamic mapping policy from those described above according to an actual application scenario and adopt the dynamic mapping policy, and close the dynamic mapping policy when it is not required. Furthermore, after selecting the dynamic mapping policy, the user may also set corresponding parameters such as switching period, switching cycle and/or erasure threshold through a corresponding interface module according to actual needs. Without selecting a dynamic mapping policy, the user may use a default mapping policy, for example, directly mapping, fully associative-mapping and N-way set associative mapping.

Persons skilled in the art should understand that, besides the switching methods described above, a mapping switching method using another switching sequence is also acceptable, provided that the switching method allows that data in a frequently accessed data block in an underlying storage medium does not merely correspond to a fixed target data block in a cache all the time, so that a target data block in a flash memory medium serving as the cache does not reach the limit of use rapidly, thereby prolonging the service life of the flash memory medium.

Persons skilled in the art should understand that, when a switching method allows the number of erasure times of each target data blocks in a cache to be close to one another, for example, be close to an average value, the service life of the flash memory medium is maximized.

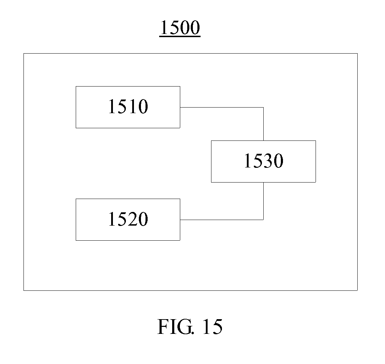

Now, reference is made to FIG. 15, FIG. 15 shows a cache system according to an embodiment of the present invention.

As shown in FIG. 15, a cache system 1500 according to this embodiment of the present invention includes: an underlying storage medium 1510; a flash memory medium 1520, coupled to the underlying storage medium, and serving as a cache of the underlying storage medium, where one or more data blocks in the underlying storage medium are mapped only to one target data block in the cache; and a processor 1530, configured to: change, at a preset time interval, a target data block in the cache of the underlying storage medium, where at least one data block in the underlying storage medium is mapped to the target data block, and the changed target data block in the cache includes a target data block currently having the maximum number of erasure times in the cache.

The processor in the cache system may be further configured to: change, in each switching period of one switching cycle, a target data block in the cache to which at least one data block in the underlying storage medium is mapped, so that after one switching cycle, the numbers of erasure times of target data blocks in the cache are close to one another, where the number of switching periods included in one switching cycle is not less than the number N of the target data blocks included in the cache.

The processor in the cache system may be further configured to: change, in each switching period of one switching cycle, a target data block in the cache to which each data block in the underlying storage medium is mapped, so that each data block in the underlying storage medium is mapped to different target data blocks in the cache in different switching periods of one switching cycle, where the number of switching periods included in one switching cycle is equal to the number of the target data blocks included in the cache.

The processor in the cache system may be further configured to: migrate, in each switching period of one switching cycle, according to a number sequence of the target data blocks in the cache, data of each target data block in the cache to a target data block having a number adjacent to that of the target data block in a round robin manner, and correspondingly change, according to migration of data in the target data blocks, a target data block to which each data block in the underlying storage medium is mapped.

The processor in the cache system may be further configured to: interchange, in each switching period of one switching cycle, data cached in a target data block currently having the maximum number of erasure times in the cache with data cached in a target data block in the cache other than the target data block having the maximum number of erasure times, where the data in the latter target data block is interchanged the minimum number of times in the current switching cycle, and the latter target data block is different from a target data block that interchanges data with the target data block currently having the maximum number of erasure times in a previous switching period of the current switching cycle, and correspondingly change a target data block to which a corresponding data block in the underlying storage medium is mapped, where one switching cycle includes N x (N-1) switching periods, and in one switching cycle, each target data block of the cache is a target data block having the maximum number of erasure times in the cache in the different N-1 switching periods.

An embodiment of the present invention further provides a cache system, where the storage system includes: an underlying storage medium; a flash memory medium, coupled to the underlying storage medium, and serving as a cache of the underlying storage medium, where one or more data blocks in the underlying storage medium are mapped only to one target data block in the cache; and a processor, configured to: monitor the number of erasure times of each target data block in the cache; when a difference in the number of erasure times between a target data block having the maximum number of erasure times and a target data block having the minimum number of erasure times in the cache reaches a preset erasure threshold, change a target data block in the cache to which at least one data block in the underlying storage medium is mapped, where the changed target data block in the cache includes a target data block currently having the maximum number of erasure times in the cache; and continuously monitor the number of erasure times generated after each target data block in the cache is changed.

The processor in the cache system may be further configured to: interchange data cached in the target data block having the maximum number of erasure times with data cached in the target data block having the minimum number of erasure times, and correspondingly perform a change so that all data blocks currently mapped to the target data block having the maximum number of erasure times in the underlying storage medium are mapped to the target data block having the minimum number of erasure times, and all data blocks currently mapped to the target data block having the minimum number of erasure times in the underlying storage medium are mapped to the target data block having the maximum number of erasure times.

Persons skilled in the art should understand that, functions of the processor in the apparatus 1500 can be implemented by means of software, hardware or a combination of software and hardware.

An embodiment of the present invention further provides a machine readable storage medium, for storing a machine executable instruction, where when the machine executable instruction is executed, a machine is enabled to change, at a preset time interval, a target data block in a cache of an underlying storage medium, where at least one data block in the underlying storage medium is mapped to the target data block, one or more data blocks in the underlying storage medium are mapped only to one target data block in the cache, the cache of the underlying storage medium includes a flash memory medium, and the changed target data block in the cache includes a target data block currently having the maximum number of erasure times in the cache.

The method may further include the following step: changing, in each switching period of one switching cycle, a target data block in the cache to which at least one data block in the underlying storage medium is mapped, so that after one switching cycle, the numbers of erasure times of target data blocks in the cache are close to one another, where the number of switching periods included in one switching cycle is not less than the number N of the target data blocks included in the cache. The method may further include the following step: changing, in each switching period of one switching cycle, a target data block in the cache to which each data block in the underlying storage medium is mapped, so that each data block in the underlying storage medium is mapped to different target data blocks in the cache in different switching periods of one switching cycle, where the number of switching periods included in one switching cycle is equal to the number N of the target data blocks included in the cache.

The sending step described above may further include the following step: migrating, in each switching period of one switching cycle, according to a number sequence of the target data blocks in the cache, data of each target data block in the cache to a target data block having a number adjacent to that of the target data block in a round robin manner, and correspondingly changing, according to migration of data in the target data blocks, a target data block to which each data block in the underlying storage medium is mapped.

The detection step described above may further include the following step: interchanging, in each switching period of one switching cycle, data cached in a target data block currently having the maximum number of erasure times in the cache with data cached in a target data block in the cache other than the target data block having the maximum number of erasure times, where the data in the latter target data block is interchanged the minimum number of times in the current switching cycle, and the latter target data block is different from a target data block that interchanges data with the target data block currently having the maximum number of erasure times in a previous switching period of the current switching cycle, and correspondingly changing a target data block to which a corresponding data block in the underlying storage medium is mapped, where one switching cycle includes N x (N-1) switching periods, and in one switching cycle, each target data block of the cache is a target data block having the maximum number of erasure times in the cache in the different N-1 switching periods.

An embodiment of the present invention further provides a machine readable storage medium, for storing a machine executable instruction, where when the machine executable instruction is executed, a machine is enabled to: monitor the number of erasure times of each target data block in a cache of an underlying storage medium, where one or more data blocks in the underlying storage medium are mapped only to one target data block in the cache, and the cache of the underlying storage medium includes a flash memory medium; when a difference in the number of erasure times between a target data block having the maximum number of erasure times and a target data block having the minimum number of erasure times in the cache reaches a preset erasure threshold, change a target data block in the cache to which at least one data block in the underlying storage medium is mapped, where the changed target data block in the cache includes a target data block currently having the maximum number of erasure times in the cache; and continuously monitor the number of erasure times generated after each target data block in the cache is changed.

The method may further include the following step: interchanging data cached in the target data block having the maximum number of erasure times with data cached in the target data block having the minimum number of erasure times, and correspondingly performing a change so that all data blocks currently mapped to the target data block having the maximum number of erasure times in the underlying storage medium are mapped to the target data block having the minimum number of erasure times, and all data blocks currently mapped to the target data block having the minimum number of erasure times in the underlying storage medium are mapped to the target data block having the maximum number of erasure times.

Persons skilled in the art should understand that, various variations and changes can be made to the methods and apparatuses disclosed in the embodiments of the present invention without departing from the essence of the present invention, and these variations and changes shall fall within the protection scope of the present invention. Therefore, the protection scope of the present invention shall be subject to the accompanying claims.

## Claims

1. A method for controlling cache mapping, comprising:
changing, at a preset time interval, a target data block in a cache of an underlying storage medium, wherein at least one data block in the underlying storage medium is mapped to the target data block, one or more data blocks in the underlying storage medium are mapped only to one target data block in the cache, the cache of the underlying storage medium comprises a flash memory medium, and the changed target data block in the cache comprises a target data block currently having the maximum number of erasure times in the cache.

2. The method according to claim 1, wherein the step of changing, at a preset time interval, a target data block in a cache of an underlying storage medium, wherein at least one data block in the underlying storage medium is mapped to the target data block comprises:
changing, in each switching period of one switching cycle, a target data block in the cache to which at least one data block in the underlying storage medium is mapped, so that after one switching cycle, the number of erasure times of target data blocks in the cache are close to one another, wherein the number of switching periods comprised in one switching cycle is not less than the number N of the target data blocks comprised in the cache.

3. The method according to claim 1, wherein the step of changing, at a preset time interval, a target data block in a cache of an underlying storage medium, wherein at least one data block in the underlying storage medium is mapped to the target data block comprises:
changing, in each switching period of one switching cycle, a target data block in the cache to which each data block in the underlying storage medium is mapped, so that each data block in the underlying storage medium is mapped to different target data blocks in the cache in different switching periods of one switching cycle, wherein the number of switching periods comprised in one switching cycle is equal to the number N of the target data blocks comprised in the cache.

4. The method according to claim 3, wherein the step of changing, in each switching period of one switching cycle, a target data block in the cache to which each data block in the underlying storage medium is mapped comprises:
migrating, in each switching period of one switching cycle, according to a number sequence of the target data blocks in the cache, data of each target data block in the cache to a target data block having a number adjacent to that of the target data block in a round robin manner, and correspondingly changing, according to migration of data in the target data blocks, a target data block to which each data block in the underlying storage medium is mapped.

5. The method according to claim 1, wherein the step of changing, at a preset time interval, a target data block in a cache of an underlying storage medium, wherein at least one data block in the underlying storage medium is mapped to the target data block comprises:
interchanging, in each switching period of one switching cycle, data cached in a target data block currently having the maximum number of erasure times in the cache with data cached in a target data block in the cache other than the target data block having the maximum number of erasure times, wherein the data in the latter target data block is interchanged the minimum number of times in the current switching cycle, and the latter target data block is different from a target data block that interchanges data with the target data block currently having the maximum number of erasure times in a previous switching period of the current switching cycle, and correspondingly changing a target data block to which a corresponding data block in the underlying storage medium is mapped;
wherein one switching cycle comprises N x (N-1) switching periods, and in one switching cycle, each target data block of the cache is a target data block having the maximum number of erasure times in the cache in the different N-1 switching periods.

6. A method for controlling cache mapping, comprising:
monitoring the number of erasure times of each target data block in a cache of an underlying storage medium, wherein one or more data blocks in the underlying storage medium are mapped only to one target data block in the cache, and the cache of the underlying storage medium comprises a flash memory medium;
when a difference in the number of erasure times between a target data block having the maximum number of erasure times and a target data block having the minimum number of erasure times in the cache reaches a preset erasure threshold, changing a target data block in the cache to which at least one data block in the underlying storage medium is mapped, wherein the changed target data block in the cache comprises a target data block currently having the maximum number of erasure times in the cache; and
continuously monitoring the number of erasure times generated after each target data block in the cache is changed.

7. The method according to claim 6, wherein the step of changing a target data block in the cache to which at least one data block in the underlying storage medium is mapped comprises:
interchanging data cached in the target data block having the maximum number of erasure times with data cached in the target data block having the minimum number of erasure times, and correspondingly performing a change so that all data blocks currently mapped to the target data block having the maximum number of erasure times in the underlying storage medium are mapped to the target data block having the minimum number of erasure times, and all data blocks currently mapped to the target data block having the minimum number of erasure times in the underlying storage medium are mapped to the target data block having the maximum number of erasure times.

8. A cache system, comprising:
an underlying storage medium;
a flash memory medium, coupled to the underlying storage medium, and serving as a cache of the underlying storage medium, wherein one or more data blocks in the underlying storage medium are mapped only to one target data block in the cache; and
a processor, configured to:
change, at a preset time interval, a target data block in the cache of the underlying storage medium, wherein at least one data block in the underlying storage medium is mapped to the target data block, and the changed target data block in the cache comprises a target data block currently having the maximum number of erasure times in the cache.

9. The cache system according to claim 8, wherein the processor is further configured to:
change, in each switching period of one switching cycle, a target data block in the cache to which at least one data block in the underlying storage medium is mapped, so that after one switching cycle, the number of erasure times of target data blocks in the cache are close to one another, wherein the number of switching periods comprised in one switching cycle is not less than the number N of the target data blocks comprised in the cache.

10. The cache system according to claim 8, wherein the processor is further configured to:
change, in each switching period of one switching cycle, a target data block in the cache to which each data block in the underlying storage medium is mapped, so that each data block in the underlying storage medium is mapped to different target data blocks in the cache in different switching periods of one switching cycle, wherein the number of switching periods comprised in one switching cycle is equal to the number N of the target data blocks comprised in the cache.

11. The cache system according to claim 10, wherein the processor is further configured to:
migrate, in each switching period of one switching cycle, according to a number sequence of the target data blocks in the cache, data of each target data block in the cache to a target data block having a number adjacent to that of the target data block in a round robin manner, and correspondingly change, according to migration of data in the target data blocks, a target data block to which each data block in the underlying storage medium is mapped.

12. The cache system according to claim 8, wherein the processor is further configured to:
interchange, in each switching period of one switching cycle, data cached in a target data block currently having the maximum number of erasure times in the cache with data cached in a target data block in the cache other than the target data block having the maximum number of erasure times, wherein the data in the latter target data block is interchanged the minimum number of times in the current switching cycle, and the latter target data block is different from a target data block that interchanges data with the target data block currently having the maximum number of erasure times in a previous switching period of the current switching cycle, and correspondingly changing a target data block to which a corresponding data block in the underlying storage medium is mapped;
wherein one switching cycle comprises N x (N-1) switching periods, and in one switching cycle, each target data block of the cache is a target data block having the maximum number of erasure times in the cache in the different N-1 switching periods.

13. A cache system, comprising:
an underlying storage medium;
a flash memory medium, coupled to the underlying storage medium, and serving as a cache of the underlying storage medium, wherein one or more data blocks in the underlying storage medium are mapped only to one target data block in the cache; and
a processor, configured to:
monitor the number of erasure times of each target data block in the cache;
when a difference in the number of erasure times between a target data block having the maximum number of erasure times and a target data block having the minimum number of erasure times in the cache reaches a preset erasure threshold, change a target data block in the cache to which at least one data block in the underlying storage medium is mapped, wherein the changed target data block in the cache comprises a target data block currently having the maximum number of erasure times in the cache; and
continuously monitor the number of erasure times generated after each target data block in the cache is changed.

14. The cache system according to claim 13, wherein the processor is further configured to:
interchange data cached in the target data block having the maximum number of erasure times with data cached in the target data block having the minimum number of erasure times, and correspondingly perform a change so that all data blocks currently mapped to the target data block having the maximum number of erasure times in the underlying storage medium are mapped to the target data block having the minimum number of erasure times, and all data blocks currently mapped to the target data block having the minimum number of erasure times in the underlying storage medium are mapped to the target data block having the maximum number of erasure times.

15. A machine readable storage medium, for storing a machine executable instruction, wherein when the machine executable instruction is executed, a machine is enabled to execute the steps in any one of claims 1 to 7.
